# EUROPÄISCHE PATENTSCHRIFT

(11) **EP 2 397 307 B1**
(45) Veröffentlichungstag und Bekanntmachung des Hinweises auf die Patenterteilung: **27.03.2013**
(21) Anmeldenummer: 10166440.7
(22) Anmeldetag: 18.06.2010
(51) Int. Cl.: B29C 51/02, B29C 51/42, B29B 13/06, B29C 37/00, B29C 51/26

(54) **System sowie Verfahren zum Thermoformen von Platten**
System and method for thermoforming plates
Système et procédé de thermoformage de plaques

(43) Veröffentlichungstag der Anmeldung: 21.12.2011
(73) Patentinhaber: Geiss AG, 96145 Sesslach (DE)
(72) Erfinder: Geiss, Manfred, 96145 Sesslach (DE)
(74) Vertreter: Isarpatent

(56) Entgegenhaltungen:
- EP-A1- 0 640 455
- DE-C1- 4 113 568
- GB-A- 1 160 779
- US-A1- 2009 122 216
- DATABASE WPI Week 200435 Thomson Scientific, London, GB; AN 2004-367249 XP002614584, -& JP 2004 082405 A (MATSUOKA M) 18. März 2004 (2004-03-18)

## Beschreibung

Die vorliegende Erfindung bezieht sich auf ein System sowie auf ein Verfahren zum Thermoformen von Platten.

Obwohl auf beliebige Platten anwendbar, werden die vorliegende Erfindung sowie die ihr zugrunde liegende Problematik in Bezug auf thermoplastisch verformbare Platten näher erläutert.

Im Allgemeinen werden die umzuformenden, thermoplastischen Platten einzeln in eine Thermoformmaschine geladen und hier zunächst auf die benötigte Umformtemperatur erhitzt. Anschließend wird die geladene Platte mittels der Thermoformmaschine in die gewünschte Form umgeformt und aus der Maschine wieder entnommen. Hierbei hat sich jedoch die Tatsache als nachteilig herausgestellt, dass der Vorgang des Aufheizens der Platten auf die benötigte Umformtemperatur lange dauert und somit den Umformungstakt sowie die Produktivität der Maschine nachteilig beeinflusst.

Die Druckschrift GB 1 160 779 A beschreibt ein Verfahren zur Herstellung thermoplastischer Produkte mit den Merkmalen des Oberbegriffs des Patentanspruchs 1.

Die Druckschrift JP 2004 082405 A beschreibt ein Verfahren zum Behandeln einer endlosen Faserbahn, wobei die Faserbahn über ein Rollensystem durch einzelne Stationen einer Bearbeitungsanlage geführt wird.

Die Druckschrift US 2009/122216 A1 beschreibt ein Verfahren zur Herstellung eines Gehäuses eines Lichtmittels, wobei das Gehäuse mittels eines Thermoformverfahrens hergestellt wird. Dabei durchläuft das umzuformende Material bestimmte Behandlungsstationen.

Aus der Druckschrift DE 41 13 568 C1 ist eine Vorrichtung zum Warmformen plattenförmiger Materialien bekannt, welche Vorheizstationen, eine automatische Ladevorrichtung zum automatischen Laden der Platten, eine Vakuumformgebungskammer, eine Entladestation und eine Beförderungsvorrichtung umfasst, um die Platten schrittweise durch dieses System zur Entladestation zu befördern.

Die DE 694 09 869 T2 beschreibt ein System zum Warmformen von Plattenmaterialien, welches hinter der Ladevorrichtung drei in Reihe geschaltete Vorheizeinrichtungen aufweist, um die zu verformenden Platten nacheinander auf die Verarbeitungstemperatur vorzuheizen. Hierbei wird jeweils lediglich eine Platte durch das Vorheizsystem schrittweise geführt. Ein Transportsystem nimmt hierzu jeweils eine Platte auf und führt diese in einem vorbestimmten Takt durch die vorgeschalteten Heizeinrichtungen, um die Heizzeit in der Thermoformmaschine zu verringern.

An diesem System hat sich allerdings die Tatsache als nachteilig herausgestellt, dass aufgrund der Einzeldurchführung der Platten durch die Vorheizeinrichtungen die jeweilige Verweildauer einer Platte in diesen Vorheizeinrichtungen im Allgemeinen lediglich bei einigen Minuten liegen darf, um den Umformtakt nicht zu lange und Produktivität der Maschine nicht zu gering werden zu lassen. Allerdings können die zu verarbeitenden Materialien der Platte Feuchtigkeit aufnehmen, so dass die Platten vor der Verarbeitung über einen längeren Zeitraum getrocknet werden müssen. Bei der DE 694 09 869 T2 ist ein derartiger Trocknungsvorgang aufgrund des vorgegebenen Umformtaktes nicht zu bewerkstelligen. Ein Trocknungsvorgang benötigt im Allgemeinen einige Stunden.

Somit liegt der vorliegenden Erfindung die Aufgabe zugrunde, ein System sowie ein Verfahren zum Thermoformen von Platten bereitzustellen, welches eine ausreichende Vortrocknung der zu verformenden Platten ohne nachteiliger Beeinflussung des Umformtaktes gewährleistet.

Diese Aufgabe wird erfindungsgemäß durch das System mit den Merkmalen des Patentanspruchs 1 sowie das Verfahren mit den Merkmalen des Patentanspruchs 8 gelöst.

Die der vorliegenden Erfindung zugrunde liegende Idee besteht darin, dass die umzuformenden Platten in eine für die gleichzeitige Aufnahme mehrerer umzuformender Platten ausgebildete Vortrocknungsstation geladen werden; die geladenen Platten in der Vortrocknungsstation in vorbestimmter Weise zum Gewährleisten eines jeweiligen vorbestimmten Vortrocknungsprozesses erwärmt werden; die vorgetrockneten Platten in Abhängigkeit des vorbestimmten Umformtaktes mit einer vorbestimmten Temperatur aus der Vortrocknungsstation in eine Thermoformstation mittels einer Beschickungsstation automatisiert und sequenziell geladen werden; und die in die Thermoformstation geladenen Platten in Abhängigkeit des vorbestimmten Umformtaktes mittels der Thermoformstation automatisiert und sequenziell umgeformt werden, wobei die Vortrocknungsstation als Paternosterofen zum sequenziellen Vortrocknen der einzelnen, umzuformenden Platten ausgebildet ist.

Somit weist die vorliegende Erfindung gegenüber den bekannten Ansätzen gemäß dem Stand der Technik ferner den Vorteil auf, dass der Umformtakt aufgrund der gleichzeitigen Vortrocknung mehrerer Platten trotz einer längeren Vortrocknungsdauer kurz gehalten werden kann, so dass weiterhin ein produktiver Durchsatz vorteilhaft gewährleistet wird. Die einzelnen Platten werden nacheinander derart in die Vortrocknungsstation geladen, dass jede Platte vorzugsweise eine ausreichende Verweildauer für einen vorbestimmten Vortrocknungsvorgang aufweist, wobei im vorbestimmten Umformtakt die vorgetrockneten Platten bereits mit einer erhöhten Temperatur aus der Vortrocknungsstation automatisiert und direkt in die Thermoformstation transportiert werden. Dadurch müssen die einzelnen Platten in der Thermoformstation nicht mehr von der Umgebungstemperatur auf die Umformtemperatur, sondern lediglich um einen bestimmten Restbetrag erhitzt werden. Hierdurch kann vorteilhaft eine erhebliche Energie zum erneuten vollständigen Aufwärmen der Platten eingespart werden.

In den Unteransprüchen finden sich vorteilhafte Ausgestaltungen und Verbesserungen des in Anspruch 1 angegebenen Systems bzw. des in Anspruch 9 angegebenen Verfahrens.

Gemäß einer bevorzugten Weiterbildung ist eine Ladestation vorgesehen, welche eine Vereinzelungseinrichtung zum sequenziellen Vereinzeln der umzuformenden Platten eines Plattenstapels und eine Ladeeinrichtung zum sequenziellen Laden einer Platte in Abhängigkeit des vorbestimmten Umformtaktes von dem Plattenstapel in die Vortrocknungsstation aufweist. Hierdurch kann der vollständige Ablauf beginnend mit der Vereinzelung und endend mit der Entnahme der umgeformten Platte aus der Thermoformmaschine vollständig automatisiert und somit äußerst wirtschaftlich ablaufen.

Nach einem weiteren bevorzugten Ausführungsbeispiel weist die Beschickungsstation eine Entladeeinrichtung zum automatisierten und sequenziellen Entladen der einzelnen, vorgetrockneten Platten in Abhängigkeit des vorbestimmten Umformtaktes und eine Fördereinrichtung zum automatisierten und sequenziellen Fördern der einzelnen, umzuformenden Platten in Abhängigkeit des vorbestimmten Umformtaktes von der Entladeeinrichtung zu der Thermoformstation auf. Dies schafft den Vorteil, dass der vollständige Ablauf der umzuformenden Platten durch das System vollständig automatisiert abläuft, wobei ein vorbestimmter, kurzer Umformtakt von beispielsweise einigen Minuten gewährleistet werden kann. Ferner können hierdurch der Herstellungsaufwand sowie die Herstellungskosten zum Erzeugen der umgeformten Platten erheblich reduziert werden.

Nach einem weiteren bevorzugten Ausführungsbeispiel ist eine Entnahmestation zum automatisierten und sequenziellen Entnehmen der umgeformten Platten in Abhängigkeit des vorbestimmten Umformtaktes aus der Thermoformstation vorgesehen. Hierdurch wird der voll-automatisierte Ablauf ferner vorteilhaft unterstützt.

Nach einem weiteren bevorzugten Ausführungsbeispiel weist der vorbestimmte Umformtakt eine Taktzeit zwischen in etwa 1 bis 5 Minuten auf. Diese Taktzeit ist beispielsweise abhängig von der Dicke der umzuformenden Platten und damit von der benötigten Verweildauer der jeweiligen Platten in der Vortrocknungsstation sowie von der benötigten Zeitdauer zum Umformen der entsprechenden Platten. Die Verweildauer jeder umzuformenden Platte in der Vortrocknungsstation beträgt beispielsweise in etwa 5 bis 8 Stunden, wobei die einzelnen Platten in der Vortrocknungsstation in etwa auf 100°C bis 150°C erwärmbar sind. Entscheidend ist vorliegend, dass das Gesamtsystem, d.h. auch die Kapazität der Vortrocknungsstation sowie die Taktzeit des Umformtaktes derart entsprechend ausgelegt sind, dass eine geeignete Anzahl an Platten für eine geeignete vortrocknungsdauer in der Vortrocknungsstation aufnehmbar sind und dennoch die gewünschte Umform-Taktzeit eingehalten werden kann. Die einzelnen Parameter des Systems können in Abhängigkeit der jeweils vorliegenden Anforderungen ausgelegt werden.

Nach einer weiteren bevorzugten Ausführungsform ist das System für verschiedene Plattengeometrien ausgelegt. Somit können vorteilhaft sowohl Platten mit unterschiedlicher Plattendicke als auch Platten mit unterschiedlichen Randabmessungen und Geometrien durch das Gesamtsystem geführt und geeignet bearbeitet werden.

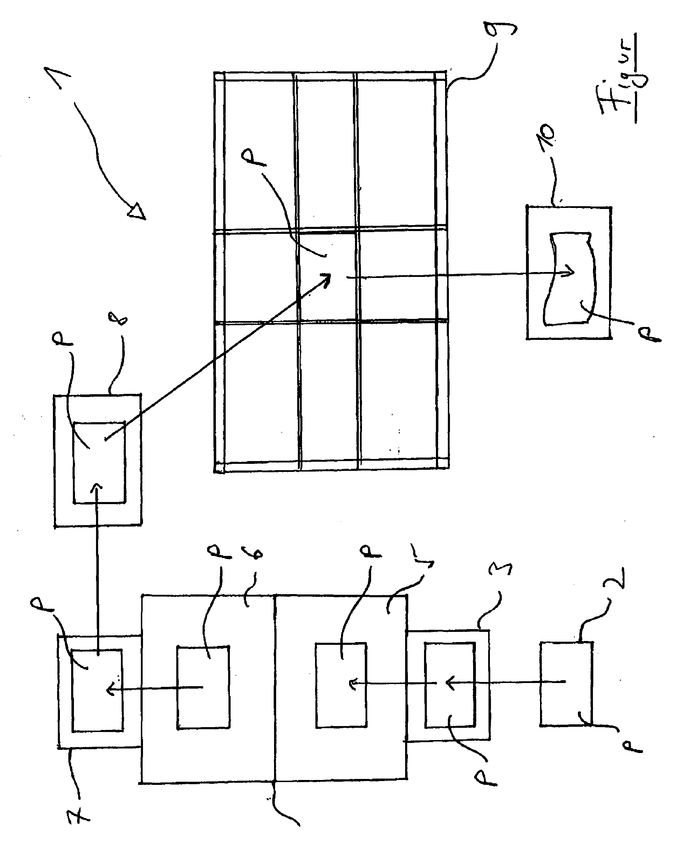

Die Erfindung wird im Folgenden anhand von Ausführungsbeispielen unter Bezugnahme auf die beiliegende Figur näher erläutert. Die Figur illustriert dabei eine schematische Ansicht eines Thermoformsystems gemäß einem bevorzugten Ausführungsbeispiels der vorliegenden Erfindung, wobei ein Durchlauf einer umzuformenden Platte P durch die einzelnen Stationen exemplarisch dargestellt ist.

Das System 1 zum Thermoformen von Platten gemäß dem vorliegenden Ausführungsbeispiel weist, wie in der Figur illustriert ist, zunächst beispielsweise einen Plattenstapel 2 auf. Hier sind insbesondere Platten gleicher geometrischer Abmessungen aufeinander für den bevorstehenden Umformprozess gestapelt. Es sei bereits an dieser Stelle erwähnt, dass das System für Platten verschiedener geometrischer Abmessungen, insbesondere auch für Platten mit unterschiedlichen Dicken ausgelegt sein soll. Im Allgemeinen umfasst jedoch ein Plattenstapel 2 Platten gleicher geometrischer Abmessungen, wobei dies nicht zwangsläufig der Fall sein muss.

Des Weiteren umfasst das System 1 eine Ladestation 3. Die Ladestation 3 umfasst gemäß dem vorliegenden Ausführungsbeispiel eine Vereinzelungseinrichtung zum Durchführen eines Vereinzelungsprozesses der auf dem Plattenstapel 2 befindlichen Platten. Hierbei ist beispielsweise eine Saugeinrichtung vorgesehen, die mittels Saugköpfen jeweils ein Platte P von dem Plattenstapel 2 von oben abhebt und somit den Plattenstapel 2 vereinzelt.

An dieser Stelle sei angemerkt, dass im Folgenden der Übersichtlichkeit halber der Verlauf einer Platte P durch das System 1 in der Figur schematisch dargestellt ist. Im Betrieb werden die einzelnen Platten des Plattenstapels 2 denselben Ablauf sequenziell bzw. schrittweise und nacheinander durchlaufen, und das vorzugsweise in einer vollständig automatisierten Art und Weise.

Die Ladestation 3 weist ferner vorzugsweise eine Ladeeinrichtung auf, welche als separate Ladeeinrichtung oder als Bestandteil der Vereinzelungseinrichtung ausgebildet sein kann und welche einem Laden der Platte P von dem Plattenstapel 2 in eine Trocknungsstation 4 dient. Beispielsweise ist die Ladeeinrichtung als Transportwagen oder dergleichen ausgebildet.

Wie oben bereits angedeutet, weist das System 1 zudem eine Trocknungsstation 4 auf, die als ein Paternosterofen 4 mit einer Vielzahl an Schubfächern ausgestaltet ist. Die Platte P wird von der Ladeeinrichtung der Ladestation 3 in ein Schubfach des Paternosterofens 4 eingeführt. Der Paternosterofen 4 ist entsprechend einer gewünschten Anzahl an aufzunehmenden Platten ausgelegt. Beispielsweise kann ein derartiger Paternosterofen bis zu 100 Schubfächer für die gleichzeitige Aufnahme einer vorbestimmten Anzahl an Platten besitzen, so dass eine Vielzahl an Platten gleichzeitig in dem Paternosterofen 4 vorgetrocknet werden können. Die einzelnen Schubfächer des Paternosterofens 4 können beispielsweise mit einem Abstand von in etwa 10 cm voneinander beabstandet angeordnet sein, jedoch sind in Abhängigkeit der Plattengeometrien auch andere Ausgestaltungen selbstverständlich denkbar.

In dem Paternosterofen 4 wird jede in ein Schubfach geladene Platte P beispielsweise zunächst in einem ersten Ofenabschnitt 5 nach oben und über eine Umlenkeinrichtung in einem zweiten Ofenabschnitt 6 wieder nach unten zu einem Entladeabschnitt geführt. Während der Förderung der Platte P zu dem Entladeabschnitt verweilt die Platte P für eine vorbestimmte Zeitdauer in dem Paternosterofen 4 und wird hierin auf eine vorbestimmte Temperatur für eine vorbestimmte Zeitdauer für einen gewünschten Vortrocknungsprozess erhitzt.

Der Vortrocknungsprozess wird zum einen durch die in dem Paternosterofen 4 eingestellte Temperatur, die Verweildauer der einzelnen Platten P in dem Paternosterofen 4 sowie durch die Umform-Taktzeit bestimmt. Beispielsweise können in dem Paternosterofen 4, wie vorher bereits erläutert, bis zu 100 Platten P gleichzeitig aufgenommen werden, so dass bei einer Umform-Taktzeit von in etwa 1 bis 5 Minuten eine Verweildauer jeder Platte P im Paternosterofen 4 von in etwa 100 bis 500 Minuten realisierbar ist. Die Trocknungstemperatur beträgt vorzugsweise zwischen 100°C und 150°C. Wie bereits erwähnt, kann allerdings das System 1 entsprechend der jeweiligen Anforderung geeignet ausgelegt werden. Beispielsweise wird der Umformtakt bei etwas dickeren, umzuformenden Platten etwas länger ausgelegt, beispielsweise bei 5 Minuten, wobei bei etwas dünneren Platten der Umformtakt mit beispielsweise lediglich einer Minute vorgegeben wird. Dadurch verbleiben die etwas dickeren Platten für eine längeren Zeitraum in dem Paternosterofen 4 für einen verlängerten Vortrocknungsvorgang, wobei dies auch mit der verlängerten Umformzeitdauer für die etwas dickeren Platten korrespondiert.

Des Weiteren umfasst das System 1 vorzugsweise eine Entladeeinrichtung 7 zum Entnehmen der Platte P aus dem Ofen 4 sowie eine Fördereinrichtung 8, wobei die Fördereinrichtung 8 und die Entladeeinrichtung 7 vorliegend zusammen die Beschickungsstation bilden können. Die Entladeeinrichtung 7 hebt beispielsweise die am Ausgang bzw. am Entladeabschnitt des Paternosterofens 4 befindliche Platte P mittels einer Hebeeinrichtung an und saugt beispielsweise die Platte P mit entsprechend vorgesehenen Saugern von unten derart an, dass die Platte P oben auf der Hebeeinrichtung aufliegt. Anschließend wird die Platte P von der Entladeeinrichtung 7 zu der Fördereinrichtung 8, beispielsweise einem geeigneten Transportwagen oder dergleichen, geführt. Die Fördereinrichtung 8 ist beispielsweise wiederum mit geeigneten Saugeinrichtungen, beispielsweise in Form von Saugköpfen, ausgebildet und saugt die Platte P beispielsweise diesmal von oben entsprechend an.

Die Beschickungsstation bzw. die Entladeeinrichtung 7 sowie die Fördereinrichtung 8 sind vorzugweise derart mit dem Paternosterofen 4 gekoppelt, dass die zu fördernde Platte P mit einer Temperatur von in etwa 100°C bis 150°C auf der Fördereinrichtung 8 bzw. dem Wagen 8 zu der eigentlichen Thermoformmaschine 9 transportiert wird. Der Paternosterofen 4 weist folglich eine Doppelfunktion auf, nämlich zum einen einen geeigneten Trocknungsvorgang zu gewährleisten und zum anderen die zu verformenden Platten P jeweils auf eine Temperatur von in etwa 100° C vorzuheizen. Bei dieser Temperatur ist das thermoplastische Plattenmaterial im Allgemeinen zwar nicht mehr vollständig stabil, jedoch auch noch nicht derart labil, dass es bei einem Transport durch die Fördereinrichtung 8 in ungeeigneter Weise instabil durchhängen würde. Die Temperatur der zu fördernden Platten P während des Beschickungsvorganges ist vorzugweise derart zu wählen, dass die Platte P in einem reproduzierbaren und lagestabilen Vorgang noch zu der Thermoformmaschine 9 transportiert und in dieser entsprechend eingespannt werden kann.

In der Thermoformmaschine 9 wird die eingespannte Platte P letztendlich auf die Umformtemperatur erhitzt und mittels der Thermoformmaschine 9 in geeigneter Art und Weise umgeformt. Dies geschieht beispielsweise bei einer Umformtemperatur von in etwa 200° C.

Nach dem Verformungsvorgang wird die umgeformte Platte P mittels einer Entnahmestation 10 automatisch in Abhängigkeit des vorbestimmten Umformtaktes aus der Thermoformstation bzw. der Thermoformmaschine 9 entnommen und an geeigneter Stelle abgelegt.

Der oben beschriebene Vorgang wird mit dem vorbestimmten Umformtakt automatisiert und sequenziell für die umzuformenden Platten P wiederholt.

Die vorliegende Erfindung schafft folglich ein System und ein Verfahren zum Thermoformen von Platten, bei welchem ein Vortrocknungsprozess über einen längeren Vortrocknungszeitraum kombiniert mit einer Vorheizung der Platten und ein automatischer Prozessablauf durch die direkte und automatisierte Kopplung der Trocknungsstation bzw. des Trocknungsofens mit der Thermoformstation bzw. der Thermoformmaschine gewährleistet wird. Das System 1 ist vorzugsweise derart ausgelegt, dass die einzelnen Platten P automatisiert und sequenziell nacheinander und schrittweise durch die einzelnen Stationen geführt werden und ein reproduzierbarer und vollständig automatisierter Umformprozess gewährleistet wird.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können die einzelnen Stationen und Einrichtungen auch von der oben beschriebenen Art und Weise modifiziert werden. Die Kapazität des Systems kann entsprechend der jeweiligen Anforderung ausgelegt werden, insbesondere können die Anzahl der gleichzeitig aufzunehmenden Platten in dem Trocknungsofen, die Umform-Taktzeit, die Vortrocknungs- bzw. Vorheiztemperatur sowie die Verweildauer der einzelnen Platten in dem Trocknungsofen entsprechend den jeweiligen Anforderungen ausgelegt werden.

## Patentansprüche

1. System (1) zum Thermoformen von Platten (P) mit:
einer Thermoformstation (9) zum Umformen der Platten (P);
einer Beschickungsstation (7, 8) zum Zuführen der umzuformenden Platten (P) zu der Thermoformstation (9);
einer für die gleichzeitige Aufnahme mehrerer umzuformender Platten (P) ausgebildeten Vortrocknungsstation (4), in welcher die umzuformenden Platten (P) jeweils in vorbestimmter Weise zum Gewährleisten eines vorbestimmten Vortrocknungsprozesses erwärmbar sind, **dadurch gekennzeichnet, dass** die Beschickungsstation (7, 8) zum automatisierten und sequenziellen Laden der vorgetrockneten Platten (P) mit einer vorbestimmten Temperatur aus der Vortrocknungsstation (4) in die Thermoformstation (9) in Abhängigkeit des vorbestimmten Umformtaktes ausgebildet ist; und dass die Vortrocknungsstation (4) als Paternosterofen (4) zum sequenziellen Vortrocknen der einzelnen, umzuformenden Platten (P) ausgebildet ist.

2. System nach Anspruch 1,
**dadurch gekennzeichnet,**
**dass** eine Ladestation (3) vorgesehen ist, welche eine Vereinzelungseinrichtung zum sequenziellen Vereinzeln der umzuformenden Platten (P) eines Plattenstapels (2) und eine Ladeeinrichtung zum sequenziellen Laden der vereinzelten Platten (P) in Abhängigkeit des vorbestimmten Umformtaktes von dem Plattenstapel (2) in die Vortrocknungsstation (4) aufweist.

3. System nach wenigstens einem der vorhergehenden Ansprüche,
**dadurch gekennzeichnet,**
**dass** die Beschickungsstation (7, 8) eine Entladeeinrichtung (7) zum automatisierten und sequenziellen Entladen der einzelnen vorgetrockneten Platten (P) aus der Vortrocknungsstation (4) in Abhängigkeit des vorbestimmten Umformtaktes und eine Fördereinrichtung (8) zum automatisierten und sequenziellen Fördern der einzelnen umzuformenden Platten (P) von der Entladeeinrichtung (7) zu der Thermoformstation (4) in Abhängigkeit des vorbestimmten Umformtaktes aufweist.

4. System nach wenigstens einem der vorhergehenden Ansprüche,
**dadurch gekennzeichnet,**
**dass** eine Entnahmestation (10) zum automatisierten und sequenziellen Entnehmen der umgeformten Platten (P) aus der Thermoformstation (4) in Abhängigkeit des vorbestimmten Umformtaktes vorgesehen ist.

5. System nach wenigstens einem der vorhergehenden Ansprüche
**dadurch gekennzeichnet,**
**dass** der vorbestimmte Umformtakt eine Taktzeit von in etwa 1 bis 5 Minuten aufweist.

6. System nach wenigstens einem der vorhergehenden Ansprüche
**dadurch gekennzeichnet,**
**dass** die Vortrocknungsstation derart ausgebildet ist, **dass** die Verweildauer jeder umzuformenden Platte (P) in der Vortrocknungsstation (4) in etwa 6 bis 8 Stunden beträgt und die Platten (P) in der Vortrocknungsstation (4) auf in etwa 100°C bis 150°C erwärmbar sind.

7. System nach wenigstens einem der vorhergehenden Ansprüche
**dadurch gekennzeichnet,**
**dass** das System (1) für verschiedene Plattengeometrien ausgelegt ist.

8. Verfahren zum Thermoformen von Platten (P), mit folgenden Verfahrensschritten:
Laden der umzuformenden Platten (P) in eine für die gleichzeitige Aufnahme mehrerer umzuformender Platten (P) ausgebildete Vortrocknungsstation (4), wobei die Vortrocknungsstation (4) als Paternosterofen (4) zum sequenziellen Vortrocknen der einzelnen, umzuformenden Platten (P) ausgebildet wird;
Erwärmen der geladenen Platten (P) in der Vortrocknungsstation (4) jeweils in vorbestimmter Weise zum Gewährleisten eines vorbestimmten Vortrocknungsprozesses;
automatisiertes und sequenzielles Laden der vorgetrockneten Platten (P) mit einer vorbestimmten Temperatur aus der Vortrocknungsstation (4) in eine Thermoformstation (9) mittels einer Beschickungsstation (7, 8) in Abhängigkeit des vorbestimmten Umformtaktes; und
automatisiertes und sequenzielles Umformen der in die Thermoformstation (9) geladenen Platten (P) mittels der Thermoformstation (9) in Abhängigkeit des vorbestimmten Umformtaktes.

9. Verfahren nach Anspruch 8,
**dadurch gekennzeichnet,**
**dass** das Laden der umzuformenden Platten (P) in die für die gleichzeitige Aufnahme mehrerer umzuformender Platten (P) ausgebildete Vortrocknungsstation (4) sequentiell durchgeführt wird und vor dem sequenziellen Laden der umzuformenden Platten (P) in die Vortrocknungsstation (4) die umzuformenden Platten (P) eines Plattenstapels (2) mittels einer Vereinzelungseinrichtung sequenziell in Abhängigkeit des vorbestimmten Umformtaktes vereinzelt werden.

10. Verfahren nach einem der Ansprüche 8 oder 9,
**dadurch gekennzeichnet,**
**dass** die Beschickungsstation (7, 8) mit einer Entladeeinrichtung (7) zum automatisierten und sequenziellen Entladen der einzelnen vorgetrockneten Platten (P) in Abhängigkeit des vorbestimmten Umformtaktes und eine Fördereinrichtung (8) zum automatisierten und sequenzellen Fördern der einzelnen, umzuformenden Platten (P) von der Entladeeinrichtung (7) zu der Thermoformstation (9) in Abhängigkeit des vorbestimmten Umformtaktes ausgebildet wird.

11. Verfahren nach einem der Ansprüche 8 bis 10,
**dadurch gekennzeichnet,**
**dass** die umgeformten Platten (P) in Abhängigkeit des vorbestimmten Umformtaktes mittels einer Entnahmestation (10) automatisiert und sequenziell aus der Thermoformstation (9) entnommen werden.

12. Verfahren nach einem der Ansprüche 8 bis 11,
**dadurch gekennzeichnet,**
**dass** die einzelnen umzuformenden Platten (P) jeweils eine Verweildauer in der Vortrocknungsstation (4) zwischen in etwa 6 bis 8 Stunden aufweisen und auf in etwa 100°C bis 150°C in der Vortrocknungsstation (4) erwärmt werden.

13. Verfahren nach einem der Ansprüche 8 bis 12,
**dadurch gekennzeichnet,**
**dass** der vorbestimmte Umformtakt mit einer Taktzeit zwischen in etwa 1 und 5 Minuten ausgebildet wird.

## Claims

1. A system (1) for thermoforming sheets (P), having:
- a thermoforming station (9) for forming the sheets (P);
- a feed station (7, 8) for feeding the sheets (P) to be formed to the thermoforming station (9);
- a predrying station (4) configured for the simultaneous accommodation of a plurality of sheets (P) to be formed, in which the sheets (P) to be formed may each be heated in a predetermined manner to ensure a predetermined predrying process,
**characterised in that** the feed station (7, 8) is configured for automated, sequential loading of the predried sheets (P) at a predetermined temperature from the predrying station (4) into the thermoforming station (9) as a function of the predetermined forming cycle; and **in that** the predrying station (4) takes the form of a paternoster furnace (4) for sequential predrying of the individual sheets (P) to be formed.

2. A system according to claim 1, **characterised in that** a loading station (3) is provided, which comprises a separating means for sequential separation of the sheets (P) to be formed of a sheet stack (2) and a loading means for loading the separated sheets (P) sequentially from the sheet stack (2) into the predrying station (4) as a function of the predetermined forming cycle.

3. A system according to at least one of the preceding claims, **characterised in that** the feed station (7, 8) comprises an unloading means (7) for automated, sequential unloading of the individual predried sheets (P) from the predrying station (4) as a function of the predetermined forming cycle and a conveying means (8) for automated, sequential conveying of the individual sheets (P) to be formed from the unloading means (7) to the thermoforming station (4) as a function of the predetermined forming cycle.

4. A system according to at least one of the preceding claims, **characterised in that** a take-off station (10) is provided for automated, sequential removal of the formed sheets (P) from the thermoforming station (4) as a function of the predetermined forming cycle.

5. A system according to at least one of the preceding claims, **characterised in that** the predetermined forming cycle has a cycle time of approximately 1 to 5 minutes.

6. A system according to at least one of the preceding claims, **characterised in that** the predrying station is configured such that the residence time in the predrying station (4) of each sheet (P) to be formed amounts to approximately 6 to 8 hours and the sheets (P) can be heated in the predrying station (4) to approximately 100 °C to 150 °C.

7. A system according to at least one of the preceding claims, **characterised in that** the system (1) is designed for different sheet geometries.

8. A method of thermoforming sheets (P), having the following method steps:
- loading the sheets (P) to be formed into a predrying station (4) configured for the simultaneous accommodation of a plurality of sheets (P) to be formed, the predrying station (4) taking the form of a paternoster furnace (4) for sequential predrying of the individual sheets (P) to be formed;
- heating the loaded sheets (P) in the predrying station (4) in each case in a predetermined manner to ensure a predetermined predrying process;
- automated, sequential loading of the predried sheets (P) at a predetermined temperature from the predrying station (4) into a thermoforming station (9) by means of a feed station (7, 8) as a function of the predetermined forming cycle; and
- automated, sequential forming of the sheets (P) loaded into the thermoforming station (9) by means of the thermoforming station (9) as a function of the predetermined forming cycle.

9. A method according to claim 8, **characterised in that** sheets (P) to be formed are loaded sequentially into the predrying station (4) configured for simultaneous accommodation of a plurality of sheets (P) to be formed and, prior to sequential loading of the sheets (P) to be formed into the predrying station (4), said sheets (P) to be formed of a sheet stack (2) are separated sequentially by means of a separating means as a function of the predetermined forming cycle.

10. A method according to one of claims 8 or 9, **characterised in that** the feed station (7, 8) is provided with an unloading means (7) for automated, sequential unloading of the individual predried sheets (P) as a function of the predetermined forming cycle and a conveying means (8) for automated, sequential conveying of the individual sheets (P) to be formed from the unloading means (7) to the thermoforming station (9) as a function of the predetermined forming cycle.

11. A method according to one of claims 8 to 10, **characterised in that** the formed sheets (P) are removed from the thermoforming station (9) automatically and sequentially by means of a take-off station (10) as a function of the predetermined forming cycle.

12. A method according to one of claims 8 to 11, **characterised in that** the individual sheets (P) to be formed each have a residence time in the predrying station (4) of between approximately 6 and 8 hours and are heated to approximately 100 °C to 150 °C in said predrying station (4).

13. A method according to one of claims 8 to 12, **characterised in that** the predetermined forming cycle has a cycle time of between approximately 1 and 5 minutes.

## Revendications

1. Système (1) de thermoformage de plaques (P) comportant :
- une station de thermoformage (9) pour le formage des plaques (P) ;
- une station d'alimentation (7, 8) pour amener les plaques (P) à mettre en forme à la station de thermoformage (9) ;
- une station préséchage (4) agencée pour la réception simultanée de plusieurs plaques (P) à mettre en forme, à laquelle station les plaques (P) à mettre en forme peuvent être respectivement chauffées de manière prédéfinie pour garantir un processus de préséchage prédéfini,
**caractérisé par le fait**
**que** la station d'alimentation (7, 8) est agencée pour le chargement automatique et séquentiel des plaques (P) préséchées à une température prédéfinie de la station de préséchage (4) dans la station de thermoformage (9) en fonction du cycle de formage prédéfini ; et que la station de préséchage (4) est agencée comme un four paternoster (4) pour le préséchage séquentiel de chaque plaque (P) à mettre en forme.

2. Système selon la revendication 1, **caractérisé par le fait qu'**une station de chargement (3) est prévue, qui présente un dispositif d'individualisation pour l'individualisation séquentielle des plaques (P) à mettre en forme d'une pile de plaques (2) et un dispositif de chargement pour le chargement séquentiel des plaques (P) individualisées en fonction du cycle de formage prédéfini de la pile de plaques (2) dans la station de préséchage (4).

3. Système selon au moins l'une des revendications précédentes, **caractérisé par le fait que** la station d'alimentation (7, 8) présente un dispositif de déchargement (7) pour le déchargement automatisé et séquentiel des différentes plaques (P) préséchées hors de la station de préséchage (4) en fonction du cycle de formage prédéfini et un dispositif de transport (8) pour le transport automatique et séquentiel des différentes plaques (P) à mettre en forme, du dispositif de déchargement (7) à la station de thermoformage (4) en fonction du cycle prédéfini.

4. Système selon au moins l'une des revendications précédentes, **caractérisé par le fait qu'**une station de retrait (10) est prévue pour le retrait automatique et séquentiel des plaques (P) à mettre en forme hors de la station de thermoformage (4) en fonction du cycle prédéfini.

5. Système selon au moins l'une des revendications précédentes, **caractérisé par le fait que** le cycle de formage prédéfini présente un cycle d'environ 1 à 5 minutes.

6. Système selon au moins l'une des revendications précédentes, **caractérisé par le fait que** la station de préséchage est agencée de telle sorte que la durée de séjour de chaque plaque (P) à mettre en forme dans la station de préséchage (4) se situe entre environ 6 et 8 heures et les plaques (P) sont chauffées jusqu'à environ 100 °C à 150 °C dans la station de préséchage (4).

7. Système selon au moins l'une des revendications précédentes, **caractérisé par le fait que** le système (1) est agencé pour différentes géométries de plaques.

8. Procédé de thermoformage de plaques (P), comportant les étapes suivantes :
- chargement des plaques (P) à mettre en forme dans une station de préséchage (4) agencée pour la réception simultanée de plusieurs plaques (P) à mettre en forme, la station de préséchage (4) étant agencée comme un four paternoster (4) pour le préséchage séquentiel de chaque plaque (P) à mettre en forme ;
- chauffage des plaques (P) chargées dans la station de présécharge (4) respectivement de manière prédéfinie pour garantir un processus de préséchage prédéfini ;
- chargement automatique et séquentiel des plaques (P) préséchées à une température prédéfinie de la station de préséchage (4) à la station de thermoformage (9) au moyen d'une station d'alimentation (7, 8) en fonction du cycle de formage prédéfini ; et
- préformage automatique et séquentiel des plaques (P) chargées dans la station de thermoformage (9) au moyen de la station de thermoformage (9) en fonction du cycle de formage prédéfini.

9. Procédé selon la revendication 8, **caractérisé par le fait que** le chargement des plaques (P) à mettre en forme est réalisé séquentiellement dans la station de préséchage (4) agencée pour la réception simultanée de plusieurs plaques (P) à mettre en forme et, avant le chargement séquentiel des plaques (P) à mettre en forme dans la station de préséchage (4), les plaques (P) à mettre en forme d'une pile de plaques (2) sont individualisées au moyen d'un dispositif d'individualisation en fonction du cycle prédéfini.

10. Procédé selon l'une des revendications 8 ou 9, **caractérisé par le fait que** la station d'alimentation (7, 8) est agencée avec un dispositif de déchargement (7) pour le déchargement automatisé et séquentiel de chaque plaque (P) préséchée en fonction du cycle de formage prédéfini et un dispositif de transport (8) pour le transport automatique et séquentiel de chaque plaque (P) à mettre en forme, du dispositif de déchargement (7) à la station de thermoformage (9) en fonction du cycle prédéfini.

11. Procédé selon l'une des revendications 8 à 10, **caractérisé par le fait que** les plaques (P) à mettre en forme sont retirées de la station de thermoformage (9) de manière automatique et séquentielle en fonction du cycle prédéfini au moyen d'une station de retrait (10).

12. Procédé selon l'une des revendications 8 à 11, **caractérisé par le fait que** chaque plaque (P) à mettre en forme présente une durée de séjour dans la station de préséchage (4) située entre environ 6 et 8 heures et est chauffée jusqu'à environ 100 °C à 150 °C dans la station de préséchage (4).

13. Procédé selon l'une des revendications 8 à 12, **caractérisé par le fait que** le cycle de formage prédéfini est agencé avec un cycle d'une durée d'environ 1 à 5 minutes.
